# EUROPEAN PATENT APPLICATION

(11) **EP 2 409 770 A2**
(43) Date of publication of application: **25.01.2012**
(21) Application number: 11174439.7
(22) Date of filing: 19.07.2011
(51) Int. Cl.: B02C 18/10, B02C 18/18, B02C 18/24, G01N 1/28

(54) **An arrangement and a method for homogenizing of sample**

(30) Priority: 20.07.2010 SE 1050818
(71) Applicant: Brodén, Bengt-Inge, 532 38 Skara (SE)
(72) Inventor: Brodén, Bengt-Inge, 532 38 Skara (SE)
(74) Representative: Romedahl, Bengt

(57) **Abstract**

The present invention relates to a device, and method, for the homogenization of a sample. The device comprises a motor (1), a cutting tool (2), a receptacle (3) and a control mechanism (4), wherein the motor is arranged to rotate the cutting tool at a number of rotation speeds, preferably steplessly, the device is arranged to vertically displace the cutting tool and the receptacle relatively to one another, and the control mechanism is configured to control the rotation speed for the cutting tool and to control the relative displacement of the receptacle relatively to the cutting tool for homogenization of a sample placed in the receptacle.

## Description

### FIELD OF THE INVENTION

The present invention relates to a device and a method for the homogenization of samples such as organic materials of the fruit, vegetables and meat type.

### BACKGROUND AND PRIOR ART

In order to analyse the content of different types of sample, the sample is typically homogenized before it is analysed in a spectrograph. Typically, this homogenization is currently carried out in the following manner. A sample is coarsely chopped in a first mixer. After this, the coarsely chopped sample is transferred to a second mixer, where the sample is mixed to form an intermediate hash. Finally, the sample is transferred to a third mixer, where the sample is finely chopped. This finely chopped sample is subsequently analysed in a spectrograph. Despite the sample having been finely chopped in three different appliances, it still contains a comparatively large flocculation component, around 40%. In order to obtain reasonable reliability in the analysis of the sample, two parallel samplings of each sample are therefore always conducted.

### BRIEF SUMMARY OF THE INVENTION

An object of the present invention is to provide a device and a method for improving the reliability in a spectrograph analysis by improved homogenization of a sample and, at the same time, to reduce the time spent on homogenizing a sample.

The present invention is based on the insight that the abovementioned object can be achieved by means of a device and a method for the homogenization of samples, in which a cutting tool can be rotated at variable speed and vertically displaced relatively to a receptacle containing a sample.

The particular characteristics of a device according to the present invention emerge from the appended patent claims. The particular characteristics of a method according to the present invention emerge from the appended patent claims.

One advantage of a device, and a method, configured according to the present invention is that the homogenization process is heavily speeded up. It is also an advantage that the homogenization is strongly improved as a result of the flocculation being heavily reduced by the invention. Yet another advantage of the invention is that the number of analyses can be halved by virtue of the fact that duplicate samples no longer need to be conducted for a reliable analysis.

Further characteristics and advantages of the present invention will emerge from the following description and subsequent patent claims.

The invention will be described in greater detail below with reference to the detailed description of embodiments and the accompanying figures, which are purely illustrative and thus are not limiting for the present invention.

### BRIEF DESCRIPTION OF THE DRAWINGS

Fig. 1 shows a device for the homogenization of a sample according to a preferred embodiment of the present invention in front view.
Fig. 2 shows the device in Fig. 1 without a receptacle.
Fig. 3 shows the device in Fig. 2 in side view.
Fig. 4 shows the hoisting device in Fig. 2 viewed from the line IV-IV.
Fig. 5 shows the device in Fig. 2 with hoisted hoisting device.
Fig. 6 shows the device in Fig. 5 in side view.

### DETAILED DESCRIPTION OF EMBODIMENTS

In the following description, specific details, such as particular techniques and applications, are given for illustrative and non-limiting purposes in order to provide a thorough understanding of the present invention. However, it will be evident to a person skilled in the art that the present invention can be realized in other embodiments which differ from these specific details. In other examples, a detailed description of well-known methods and devices is omitted so as not to obfuscate the description of the present invention with unnecessary details.

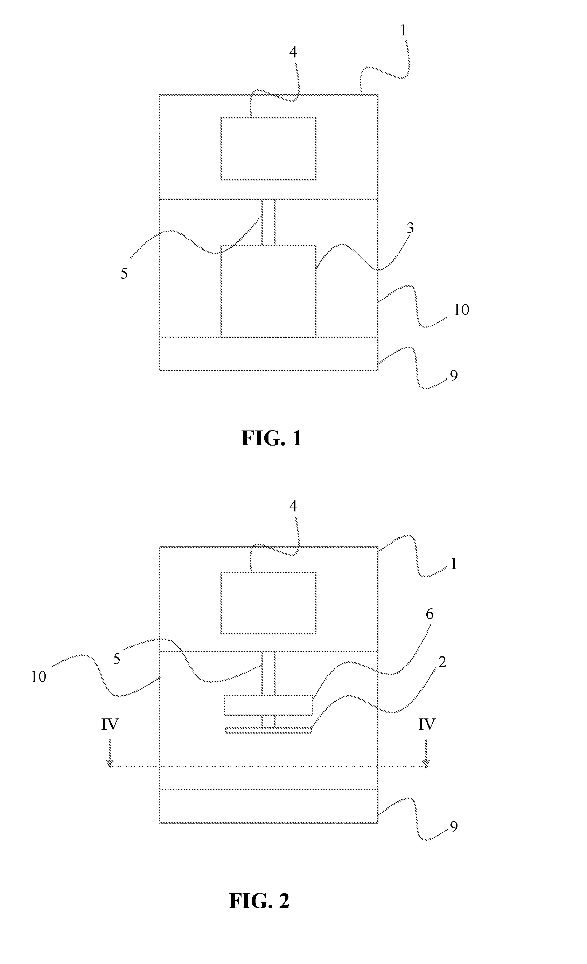

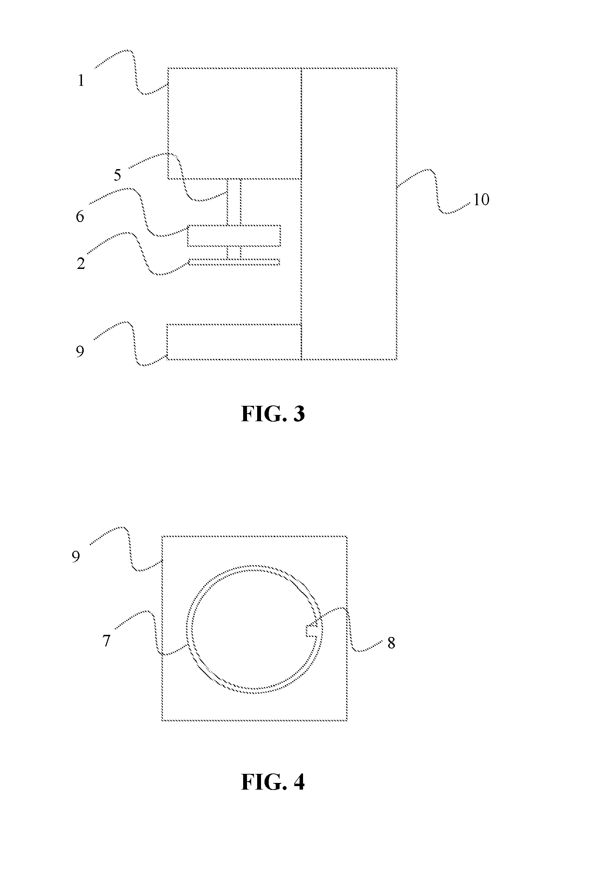

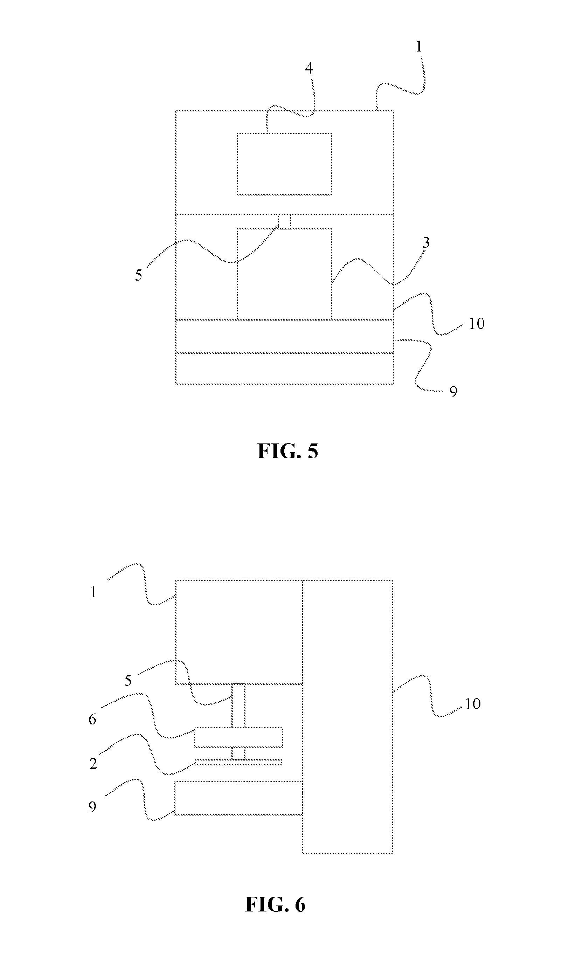

An embodiment of a device for homogenization according to the present invention will be described with reference to Figs. 1-6.

The device comprises a motor 1, a cutting tool 2, a receptacle 3 and a control mechanism 4. The motor 1 is arranged to rotate the cutting tool 2 at a number of rotation speeds, preferably steplessly. The device is arranged to vertically displace the cutting tool 2 and the receptacle 3 relatively to one another, preferably by up and down displacement of a hoisting device 9. The control mechanism 4 is configured to control the rotation speed for the cutting tool 2 and to control the relative displacement of the receptacle 3 relatively to the cutting tool 2 for homogenization of a sample placed in the receptacle 3.

The cutting tool 2 is fixed to a drive shaft 5, which drive shaft also comprises a splash guard 6 for the containment of a sample placed in the receptacle 3, which is upwardly open. In addition, the drive shaft can be detachably fastened to the motor 1 by an electrically controlled clutch. The drive shaft 5 is put in place in engagement position in the motor 1 and electric locking of the drive shaft 5 to the motor 1 is preferably carried out by pressing of a button on a touch display coupled to the control mechanism 4. By having an electric locking of the drive shaft 5 to the motor 1, no manual strength is needed for secure fastening and the fastening, moreover, can be done quickly and always sufficiently secured. Both the splash guard 6 and the cutting tool 2 are shaped to fit precisely inside the receptacle 3. The receptacle and the cutting tool/splash guard are thus shaped to fit one another.

The motor 1 is preferably a brush motor of about 2 h.p., which can steplessly drive the drive shaft 5 at up to 4000 r.p.m.

The receptacle 3 is preferably detachably fastened to the device by an electrically controlled clutch. In this way, it is easy to clean the receptacle 3 between various homogenization processes. In addition, the receptacle 3 is preferably made of metal, advantageously stainless steel, for stability during the homogenization process and robustness against repeated cleaning.

The device advantageously comprises a groove 7 for stable fastening of the receptacle 3, in which the receptacle 3 has corresponding protrusions, and in which the groove 7 preferably further comprises a rotation-preventing profile 8. Advantageously, the device comprises a plurality of concentric grooves 7 for fastening of a number of different-sized receptacles 3. For the homogenization of currently used food samples, a seven-litre receptacle and a one-litre receptacle are advantageously provided.

For a stable vertical relative displacement of the receptacle relatively to the cutting tool, the control mechanism is preferably configured to displace the receptacle vertically without vertical displacement of the cutting tool. Advantageously, the device comprises a hoisting device 9 for vertical displacement of the receptacle. This hoisting device 9 is advantageously driven by a separate motor, preferably arranged in a back piece 10 of the device.

In order to ensure secure handling of the homogenization device, it preferably comprises openable safety doors (not illustrated), which in the open position electronically prevent rotation of the cutting tool and in the closed position physically prevent access to the cutting tool.

In order to achieve an optimum possible homogenization, the cutting tool preferably comprises two, alternatively more, peripherally symmetrically positioned cutters, one being arranged to blow the sample upwards during rotation and the other being arranged to suck the sample downwards during rotation. The fact that the one cutter has one cutting angle to the sample and the other cutter has an opposite cutting angle to the sample means that a circulation of the sample which allows good homogenization is obtained.

Homogenization of a sample thus comprises the steps: filling of a receptacle with a sample, mounting of the receptacle in the homogenization device, choice of homogenization program tailored to the sample, rotation of the cutting tool through the sample, vertical displacement of the receptacle and the cutting tool relatively to one another, and increasing of the rotation speed of the cutting tool.

Advantageously, the receptacle is electronically fastened to the hoisting device, which hoisting device raises and lowers the receptacle during the homogenization process. This is advantageously supplemented by the fact that the cutting tool in part sucks the sample downwards in the receptacle and in part blows the sample upwards in the receptacle.

The choice of homogenization program preferably comprises inputting of the type of sample to be homogenized, for example tomato, and the weight of the sample. The control tool then uses a dynamic table to control the rotation speed for the cutting tool and the time for which the receptacle is to be raised and lowered. The table is dynamic in that the rotation speed and the time for the respective sample type are revisable. In so far as the device comprises a balance built into the hoisting device, only the sample type needs to be specified in the inputting process and the weight can be measured directly by the control mechanism.

In a first homogenization stage, the cutting tool is rotated up to a first rotation speed (for example, for 3 kg tomatoes, 500 r.p.m.) when the splash guard is down in the receptacle, and the receptacle is raised from a lower position, in which the sample has no contact with the cutting tool, to an upper position, in which the sample is in contact with the cutting tool. When the cutting tool reaches the bottom of the receptacle, the rotation speed is preferably increased (for example, for 3 kg tomatoes, 1000 r.p.m.) and the receptacle is thereafter lowered from the upper position to the lower position. If need be, this rotation speed can be repeated with a number of oscillations, but normally 1 stroke is sufficient, possibly with an extra oscillation. The most recent setting for a sample type is stored for future homogenization of the same sample type.

In a second homogenization stage, the cutting tool is rotated up to a second rotation speed higher than the first rotation speed (for example, for 3 kg tomatoes, 2000 r.p.m.) when the splash guard is in the bottom of the receptacle. The receptacle is lowered from the upper position to the lower position and the receptacle is thereafter raised from the lower position to the upper position. This stroke, too, can be repeated with a number of oscillations, but typically 1-2 strokes is sufficient.

In a third homogenization stage, the cutting tool is rotated up to a third rotation speed higher than the second rotation speed (for example, for 3 kg tomatoes, 4000 r.p.m.) when the splash guard is in the bottom of the receptacle. The receptacle is lowered from the upper position to the lower position and the receptacle is thereafter raised from the lower position to the upper position, the up and down displacement of the hoisting device being repeated a number of times up to the desired homogenization of the sample (for example, for 3 kg tomatoes, 20 seconds).

The device works best for not too hard organic samples, such as fruit, vegetables and meat, but also works for harder/drier samples such as cereals and dried spices. For harder/drier samples, the cutting tool is advantageously replaced by a milling tool, which operates in corresponding fashion to the cutting tool. It is evident that the present invention can be varied in a number of ways. Such variations should not be regarded as deviation from the scope of the present invention. All such variations which are evident to a person skilled in the art are meant to be included within the scope of the present invention according to the attached patent claims.

## Claims

1. Device for the homogenization of a sample, **characterized by** a motor (1), a cutting tool (2), a receptacle (3) and a control mechanism (4), wherein
the motor is arranged to rotate the cutting tool at a number of rotation speeds, preferably steplessly,
the device is arranged to vertically displace the cutting tool and the receptacle relatively to one another, and
the control mechanism is configured to control the rotation speed for the cutting tool and to control the relative displacement of the receptacle relatively to the cutting tool for homogenization of a sample placed in the receptacle.

2. Device according to Claim 1, wherein the cutting tool is fixed to a drive shaft (5), which drive shaft also comprises a splash guard (6) for the containment of a sample placed in the receptacle.

3. Device according to Claim 2, wherein the drive shaft can be detachably fastened to the motor by an electrically controlled clutch.

4. Device according to any one of Claims 1-3, wherein the receptacle is detachably fastened to the device by an electrically controlled clutch.

5. Device according to any one of Claims 1-4, comprising a groove (7) for fastening of the receptacle.

6. Device according to Claim 5, wherein the groove comprises a rotation-preventing profile (8).

7. Device according to Claim 5 or 6, comprising a plurality of grooves for fastening of a number of different-sized receptacles.

8. Device according to any one of Claims 1-7, comprising a hoisting device (9) for vertical displacement of the receptacle.

9. Device according to Claim 8, wherein the control mechanism is configured to displace the receptacle vertically without vertical displacement of the cutting tool.

10. Device according to any one of Claims 1-9, comprising openable safety doors, which in the open position prevent rotation of the cutting tool and in the closed position prevent access to the cutting tool.

11. Device according to any one of Claims 1-10, wherein the cutting tool comprises two peripherally symmetrically positioned cutters, one being arranged to blow the sample upwards during rotation and the other being arranged to suck the sample downwards during rotation.

12. Method for the homogenization of a sample, comprising the steps:
filling of a receptacle with a sample,
mounting of the receptacle in a homogenization device,
choice of homogenization program tailored to the sample,
rotation of the cutting tool through the sample,
vertical displacement of the receptacle and the cutting tool relatively to one another, and
increasing of the rotation speed of the cutting tool.

13. Method according to Claim 12, comprising the steps: in one part of the cutting tool suck the sample downwards in the receptacle, and in another part of the cutting tool blow the sample upwards in the receptacle.

14. Method according to Claim 12 or 13, comprising the steps:
in a first homogenization stage, rotate the cutting tool up to a first rotation speed and raise the receptacle from a lower position, in which the sample has no contact with the cutting tool, to an upper position, in which the sample is in contact with the cutting tool, and thereafter lower the receptacle from the upper position to the lower position,
in a second homogenization stage, rotate the cutting tool up to a second rotation speed higher than the first rotation speed, preferably in the upper position, and raise the receptacle from the lower position to the upper position and thereafter lower the receptacle from the upper position to the lower position,
in a third homogenization stage, rotate the cutting tool up to a third rotation speed higher than the second rotation speed, preferably in the upper position, and raise the receptacle from the lower position to the upper position and thereafter lower the receptacle from the upper position to the lower position, the up and down displacement being repeated a number of times up to the desired homogenization of the sample.

15. Method according to Claim 14, wherein the receptacle is raised and lowered once more in the first homogenization stage and in the second homogenization stage.
